(19) Europäisches Patentamt / European Patent Office / Office européen des brevets

(11) **EP 2 789 125 B1**

(12) **EUROPEAN PATENT SPECIFICATION**

(45) Date of publication and mention
of the grant of the patent:
**16.05.2018 Bulletin 2018/20**

(51) Int Cl.:
*H04L 12/24* (2006.01)          *H04L 12/26* (2006.01)
*G06F 11/34* (2006.01)          *G06F 9/44* (2018.01)

(21) Application number: **12806798.0**

(22) Date of filing: **08.12.2012**

(86) International application number:
**PCT/US2012/068641**

(87) International publication number:
**WO 2014/088599 (12.06.2014 Gazette 2014/24)**

(54) **MODELLING OF A DISTRIBUTED INTERNET PROTOCOL NETWORK ANALYSIS FLOW BASED ON PERFORMANCE CONSTRAINTS**

MODELLIERUNG EINES VERTEILTEN INTERNETPROTOKOLLNETZWERK-ANALYSEFLUSSES BASIEREND AUF LEISTUNGSEINSCHRÄNKUNGEN

MODÉLISATION D'UN FLUX D'ANALYSE DE RÉSEAU DE TYPE PROTOCOLE INTERNET DISTRIBUÉ REPOSANT SUR DES CONTRAINTES DE PERFORMANCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.10.2014 Bulletin 2014/42**

(73) Proprietor: **Huawei Technologies Co., Ltd. Longgang District Shenzhen, Guangdong 518129 (CN)**

(72) Inventors:
• **FAN, John**
  **Fremont, California 94539 (US)**
• **LIN,Chuhyu**
  **San Jose, California 95120 (US)**
• **CHU, Ronald**
  **Palo Alto, California 94306 (US)**
• **WEIGT, George**
  **Santa Clara, California 95051 (US)**
• **CHIEN, Fangli**
  **San Jose, California 95129 (US)**

(74) Representative: **Körber, Martin Hans**
**Mitscherlich PartmbB**
**Patent- und Rechtsanwälte**
**Sonnenstrasse 33**
**80331 München (DE)**

(56) References cited:
WO-A2-2006/130667     WO-A2-2006/130667
US-A1- 2005 049 924     US-A1- 2005 049 924
US-A1- 2009 222 782     US-A1- 2011 145 286
US-A1- 2011 145 286     US-A1- 2012 239 799
US-A1- 2012 239 799

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

Operations Support Systems (OSS) and similar computer systems have been developed to analyze networks such as telecommunications networks and internet protocol (IP) networks. The analysis may involve the monitoring of network traffic, the configuration of network components, the discovery and management of faults in the network, and similar activities. Numerous automated network analysis tools are available for performing such activities, such as packet analyzers, port scanners, hardware scanners, and similar equipment.

WO 2006/130667 A2 discloses methods and systems for modeling a multiprocessor system in a graphical modeling environment.

**SUMMARY**

In one embodiment, the disclosure includes a system for generating and executing a distributed Internet Protocol, IP, network analysis model according to independent claim 1. These and other features will be more clearly understood from the following detailed description taken in conjunction with the accompanying drawings and claims. Preferred embodiments are covered by the dependent claims. The scope of the invention is defined by the appended claims.

**BRIEF DESCRIPTION OF THE DRAWINGS**

For a more complete understanding of this disclosure, reference is now made to the following brief description, taken in connection with the accompanying drawings and detailed description, wherein like reference numerals represent like parts.

FIG. 1 is a diagram of components in an analysis framework model.
FIG. 2 is a diagram of an analysis model from an engineering perspective.
FIG. 3 is a diagram of an analysis model from an analysis design perspective.
FIG. 4 is a diagram of a calculation of the performance of an analysis model.
FIG. 5 is a flowchart illustrating analysis model design performance verification.
FIG. 6 is a diagram of execution of a distributed model.
FIG. 7 is a diagram of execution of a distributed model across multiple devices.
FIG. 8 is a diagram of a hardware design.
FIG. 9 is a schematic diagram of a network component.
FIG. 10 is a schematic diagram of a computer system.

**DETAILED DESCRIPTION**

It should be understood at the outset that, although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims, which define the scope of the invention. Existing model designs for IP network analysis typically consider only logic flow. That is, there are no specific performance requirements in each step of analysis, and detailed performance requirements may be missing when a model is designed. Also, there may be no specific execution requirements. That is, the rules of execution may not be defined, and distributed execution may not be embedded in design methodology. In addition, existing IP network analysis modeling does not support real time response. That is, there is no specific target real time response time, no maximum target response time for a model as a whole, and no guarantee of a response time for each specific analysis path. Also, there is no hardware consideration in existing software modeling design. In general, existing network analysis model designs are based on flow charts and consider only analysis logic in the model. There is no guaranteed performance number and no software and hardware integration. Real time response is not supported, and system resources are not utilized in an optimal way.

Embodiments of the present disclosure provide a distributed IP network analysis modeling system capable of completing multiple complex analysis models in real time. The total analysis time may be controlled within a small range to achieve real time analysis. An object-oriented model design methodology with specific performance requirements is provided. Analysis is achieved through the use of analysis blocks with distributed execution paths. Dynamic distributed analysis may be performed based on real time resource availability. Also, a predefined constant real time response in a model is provided. In addition, hardware is integrated into software modeling.

The network analysis modeling system disclosed herein includes three areas: an analysis model, models with real time performance, and distributed model execution. Each of these areas will now be considered in turn.

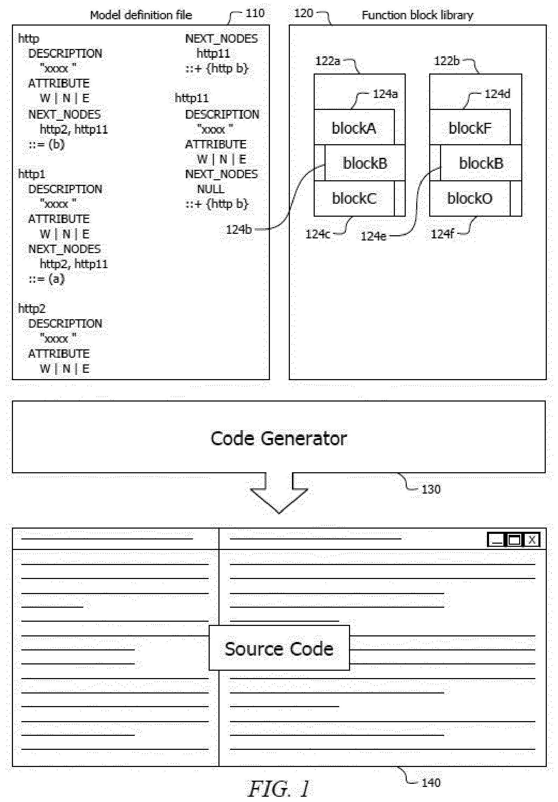

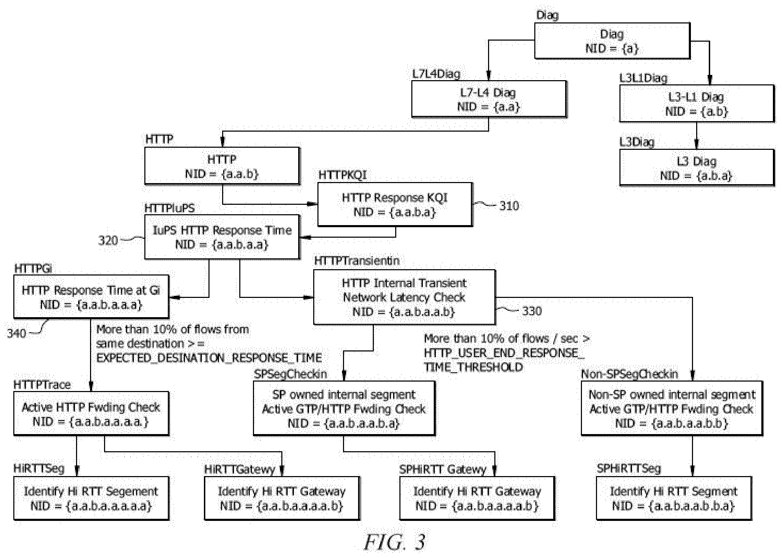

As shown in FIG. 1, there are three components in the analysis model framework, a model definition file 110, an analysis function block library 120, and a code generator 130. The model definition file 110 is a text definition file that defines an analysis model and represents analysis flow and its hierarchical analysis tree. A layer 7 to layer 1 IP network analysis or diagnostic model may be defined in the text file 110. The hierarchical tree may be stored in memory using a binary tree indexed with variable length keys as discussed in conjunction with FIG. 3.

The analysis function block library 120 may include a plurality of reusable analysis nodes 122 in a model definition. Each analysis node 122 may be associated with a set of attributes including execution time and memory requirements. Each analysis node 122 may be identified by a unique analysis node identifier (ID). The node ID may be a string-based ID using character sets from a to z, 1 to 9, and A to Z. The node ID's path from the root to the node may be the analysis node's ID as well as its key. The maximum key length may be the depth of the tree. These concepts are discussed below with regards to FIG. 3.

A model may be composed of a number of unified analysis nodes 122 organized as a hierarchical tree. The analysis nodes 122 may be referred to as unified since the number of lines of code in each analysis node 122 is predefined, the inputs and outputs of each analysis node 122 are similar, and the analysis nodes 122 are all driven by a generic state machine.

Each analysis node 122 may consist of one or more reusable analysis blocks 124. Each analysis block 124 may be associated with a set of attributes including lines of code, average execution time for one line of code on certain predefined hardware, memory requirements, and access to any input/output (I/O). To support different types of I/O, each specific type of I/O may be implemented in one particular analysis I/O block.

The code to implement a model is automatically generated by the code generator 130 from the model definition file 110 and the analysis function block library 120. That is, the code generator 130 generates analysis model source code 140 from the analysis function block library 120 by parsing the model definition file 110. When code 140 is auto-generated by the code generator 130, the model framework is complete. During system initialization, an analysis model tree is created by auto-generated initialization functions. To start an analysis model, the processing entry point uses the first node's node ID to locate the starting node, and processing may be started from there. In addition, at each analysis node 122, a direct jump to another analysis node 122 may be added to distribute execution to a different central processing unit (CPU) core or a different target machine.

A generic state machine may be used to drive a hierarchical tree to dynamically choose the next analysis node. Below is an example of pseudo code for a generic state machine that may drive the model. The pseudo code represents a node-generic finite state machine (FSM) template in which the node's name is variable and may be replaced with the real node name by the automatic code generator 130 after the node's definition is complete.

```
<%=fsm_func_description%>
void
fsm_func_<%=name %> (struct fsm_node *ptr, <%=aug %>)
{
  int state;
  If (ptr->func) {
    state = ptr->func(<%=aug %>);
  } else {
    /* No function defined, return undefined state */
    return;
  }
  if (state < MAX_NUM_NEXT_STATE) {
    If (ptr->next[state]) {
      Ptr->next[state](<%=aug %>);
    } else {
      /* TODO: no next function defined, add error handling here */
      exit(1);
    }
  } else {
    /* TODO: state undefined, add error handling here */
    exit(1);
  }
}
```

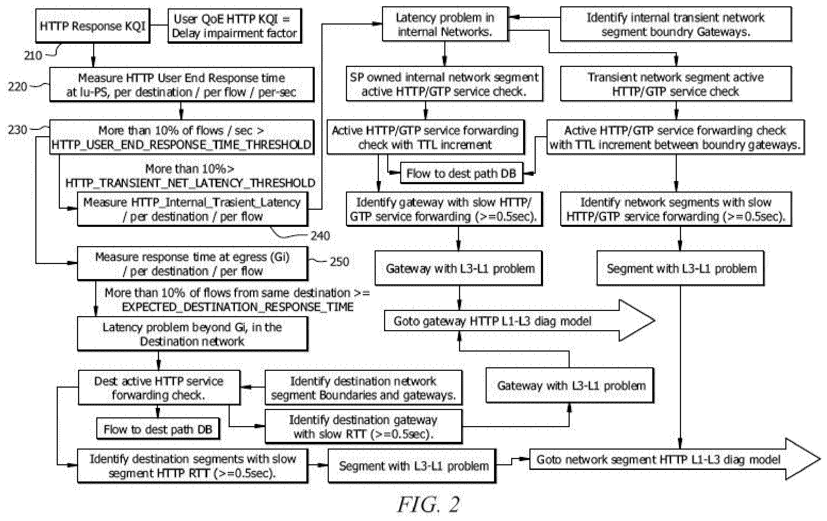

FIG. 2 illustrates an example of an analysis model that may be implemented based on the embodiments disclosed herein. Specifically, FIG. 2 is a hypertext transfer protocol (http) layer 7 (L7) to layer 4 (L4) quality of experience (QoE) model. Each of the boxes in the figure may represent an analysis block or an analysis node. In this example, an http response key quality indicator (KQI) is determined, as indicated at box 210. At box 220, an http user end response time is measured at the interface, per destination, per flow, per second. Then, at box 230 it is determined whether more than 10% of the flows per second are greater than the http user end response time threshold. It will be appreciated that metrics other than 10% may be used. If the determination at box 230 is positive, then at box 240 an http internal transient latency per destination, per flow is measured. If the determination at box 230 is negative, then at box 250 a response time at egress (the interface) per destination, per flow is measured. Additional procedures in the analysis model may be discerned from the drawing. The remaining flow proceeds as described in FIG. 3.

FIG. 2 may be considered an engineering design model. FIG. 3 illustrates the same model from an analysis model design perspective. Specifically, FIG. 3 shows an http L7-L1 QoE model hierarchical tree. It can be seen from the figure that the path from the root to one of the analysis nodes is that node's ID. A node's ID may be its key as well. For example, the ID and the key for the HTTPKQI node 310 is {a.a.b.a}. Box 310 in FIG. 3 is equivalent to box 210 in FIG. 2, box 320 in FIG. 3 is equivalent to boxes 220 and 230 in FIG. 2, box 330 in FIG. 3 is equivalent to box 240 in FIG. 2, box 340 in FIG. 3 is equivalent to box 250 in FIG. 2, and so on. The models illustrated in FIG. 2 and FIG. 3 are provided as examples of models that may be generated by the systems and methods disclosed herein. It should be understood that other analysis models may be generated.

FIG. 3 also shows an example of the hierarchal naming described herein. The diagnostic analysis block at the top of FIG. 3 has NID {a}. Each level of analysis block under the diagnostic block has an additional level appended to the NID, and the identifier within each additional level is unique. For example, Layer 7-Layer 4 diagnostic analysis block has NID {a.a} and Layer 3-Layer 1 diagnosis analysis block has NID {a.b}. This pattern is repeated at each additional level of analysis block as shown in FIG. 3. A longest match matching algorithm may be used to index each tree node.

The concept of a model with real time performance will now be considered. The performance of an analysis model may be defined as:

$$\text{ANALYSIS\_MODEL\_PERFORMANCE} =$$
$$\text{MAX\_CODE\_LINES\_PER\_NODE} \times$$
$$\text{MAX\_TREE\_DEPTH} \times$$
$$\text{AVERAGE\_EXE\_TIME\_PER\_LINE}$$

where ANALYSIS_MODEL_PERFORMANCE is the analysis model performance, MAX_CODE_LINES_PER_NODE is the maximum number lines of code in an analysis node, MAX_TREE_DEPTH is the maximum tree depth, and AVERAGE_EXE_TIME_PER_LINE is the average execution time per line.

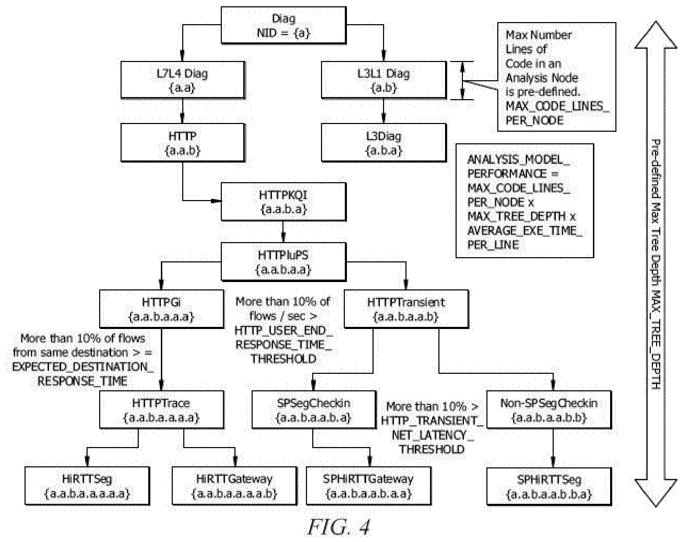

To comply with the above constraint, ANALYSIS_MODEL_PERFORMANCE may first be defined to meet a real time performance target, i.e., a predefined execution time. MAX_CODE_LINES_PER_NODE may be pre-defined based on the available analysis blocks, and MAX_TREE_DEPTH may be calculated or defined to meet the analysis model performance. FIG. 4 illustrates these principles.

An analysis node might perform I/O, such as storage I/O and communication I/O. To maintain a measurable performance, the maximum round trip I/O time to a target, MAX_IO_RTT, may be defined for each type of analysis I/O block. An I/O round trip time to a target should not exceed MAX_IO_RTT.

One analysis model may contain multiple sub-trees, and each sub-tree may have multiple branches. Each individual linear execution path may be identified, and execution time along a linear path may be calculated in order to comply with both MAX_TREE_DEPTH and analysis model performance.

An analysis model may be designed based on the execution time constraint and available analysis blocks. During the design, an analysis I/O block may be converted from MAX_IO_RTT to lines of code for convenience of measurement. To verify compliance to the execution time constraint during design, all linear paths and sub-trees may be identified and the total execution time for each linear path may be verified using following formula:

$$\text{(Total execution time for each Linear Path} =$$
$$\text{(Total lines of code along this Linear Path} + \text{Total lines of code converted from analysis I/O blocks)} \times$$
$$\text{AVERAGE\_EXE\_TIME\_PER\_LINE)} <$$
$$\text{ANALYSIS\_MODEL\_PERFORMANCE}$$

The execution of different sub-trees may be distributed to different dedicated CPU cores to ensure a linear execution performance. The execution process may request a CPU and memory resources from a resource manager and may release the CPU and memory resources back to the resource manager upon completing the execution of a branch or a sub-tree. The minimum CPU and memory resources may be calculated once the design of an analysis model is complete. A CPU resource may be controlled in run time, and memory may be pre-allocated during system initialization by the resource manager. Each of the analysis blocks shown in FIG. 4 may be implemented on a different CPU or core.

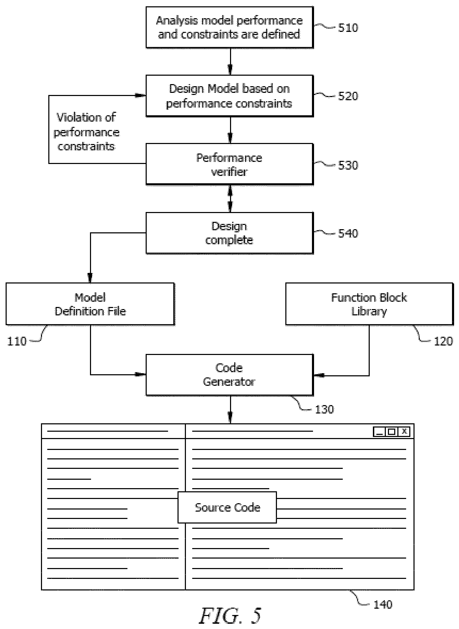

To achieve automation, constraints may be validated automatically by a performance verifier during the design phase, and adjustments may be made if a violation of a constraint is discovered. FIG. 5 is a flowchart illustrating such performance verification. At block 510, analysis model performance and constraints are defined. At block 520, a design model based on the performance constraints is created or modified. At block 530, the performance of the design model is evaluated by a performance verifier. If the performance of the design model is within the performance constraints then, at box 540, the design may be considered complete. If, at box 530, the performance of the design model is determined to be outside the performance constraints, the flow returns to box 520, and the design model may be modified to satisfy the constraints. The procedures at boxes 520 and 530 may be repeated as often as necessary to generate a design model that meets the performance constraints. When the design is complete at box 540, the model definition file 110, the function block library 120, and the code generator 130 may operate as described with regard to FIG. 1 to generate the source code 140.

Distributed model execution will now be considered. Analysis models may run on a distributed platform that has a flow-based load balancer to distribute data flows to multiple analysis nodes. Based on CPU affinity support in the operating system, each execution process or thread may be bound to one CPU core during system initialization.

Resources may be managed by a central management entity or resource manager that manages and monitors resource utilization and availability. The resource manager may pre-allocate CPU and memory resources during system initialization. When a request of resources is made by an analysis node, the resource manager may grant, retrieve, and/or return a CPU core or memory resource based on the attributes of the target analysis node.

For model execution, an analysis may be started on any CPU core during system initialization by providing an analysis node ID and input data. Upon resources being granted by the resource manager, the first processing node may be retrieved with the node's ID as a key, and processing may be started by executing the first node's analysis functions.

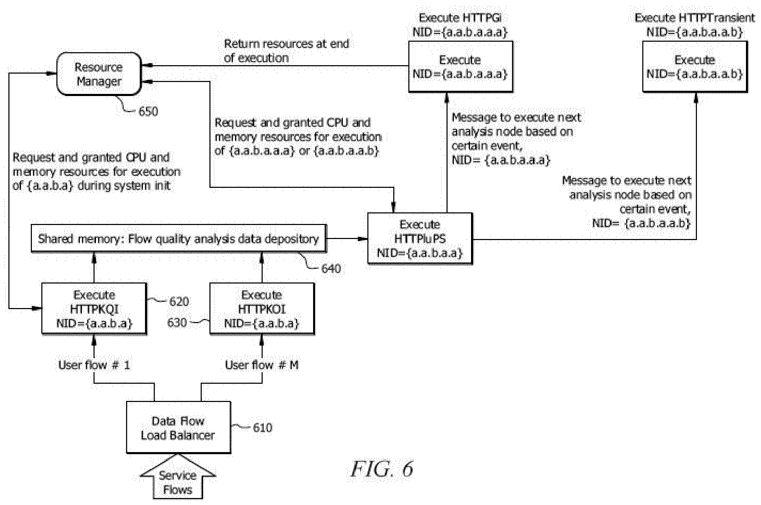

FIG. 6 illustrates execution of such a distributed model. A data flow load balancer 610 divides a data flow into two streams, each of which is processed by a different CPU. The first stream flows through analysis block 620, which executes HTTPKQI, and the second stream flows through analysis block 630, which executes HTTPKOI. Analysis blocks 620 and 630 may provide their outputs to a shared memory 640, from which other analysis blocks may access the outputs. A resource manager 650 may receive requests for CPUs and memory from analysis blocks 620 and 630 and the other analysis blocks, may grant the requests, and may receive CPUs and memory returned by the analysis blocks.

An analysis node's function may return five possible values. A first possible value may be the execution status, i.e., either success or failure with a cause. If the status is failure, the analysis may stop and an error condition may be reported. A second possible value may be execution result data, which may be the input for the processing of the next node. A third possible value may be the execution state for choosing the next processing node, i.e., the state machine result. If the node's state machine is defined, the analysis may directly jump to the next node and execute the next node's function. A fourth possible value may be the next processing node's ID so that a jump to another sub-tree may occur and execution of that sub-tree may take place on another CPU core. In this case, the processing may start from the first step again. In the fifth case, if no more processing is needed and the analysis is complete, the result of the analysis may be returned. In this case, the state machine's next node may not be specified and the next processing node's ID may be empty. The execution of a linear path in an analysis model may be transitioned from one CPU core to another. When a CPU core transition is defined in a model, the current analysis node may request a CPU and memory resources from the resource manager based on the next analysis node's attributes. The resource manager may grant a CPU core and memory resources to the next node. A message that carries node ID, resource, and input data may be sent to the target process or thread running on the granted CPU core to start execution of the next analysis node. At the end of the execution, the last analysis node may return resources back to the resource manager.

Analysis nodes belonging to a model may be executed across multiple devices. In such cases, a master resource manager may be assigned to manage overall resources. The resource manager at each device may manage local resources and report resource status to the master resource manager. The master resource manager may be responsible for resource granting and for handling resource returns. Resource requests, grants, and returns may go through a remote shared memory.

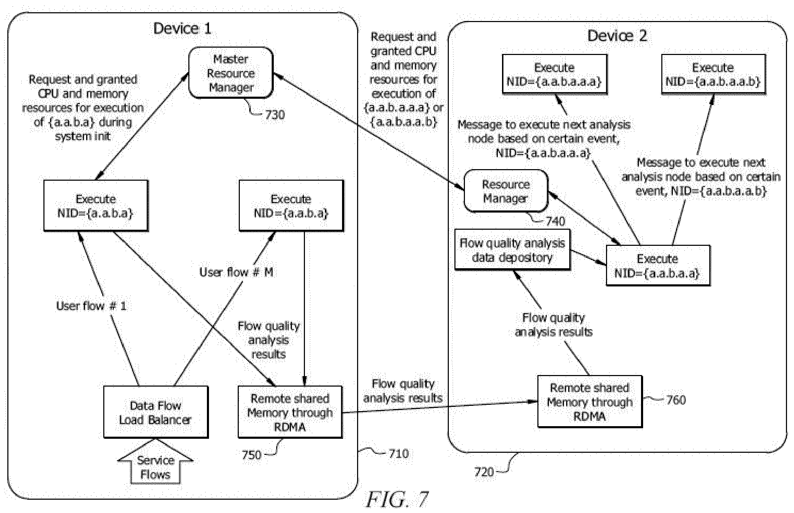

FIG. 7 illustrates such execution of a distributed model across multiple devices. A first device 710 and a second device 720 may each execute analysis blocks as described above. In addition, resource requests and grants may be made between the devices 710 and 720, and data may be shared between the devices 710 and 720. The first device 710 includes a master resource manager 730, which may receive CPU and memory requests from a local resource manager 740 in the second device 720 and may grant CPU and memory resources to the local resource manager 740 in the second device 720. In addition, data stored in a remote direct memory access (RDMA) component 750 in the first device 710 may be shared with an RDMA component 760 in the second device 720.

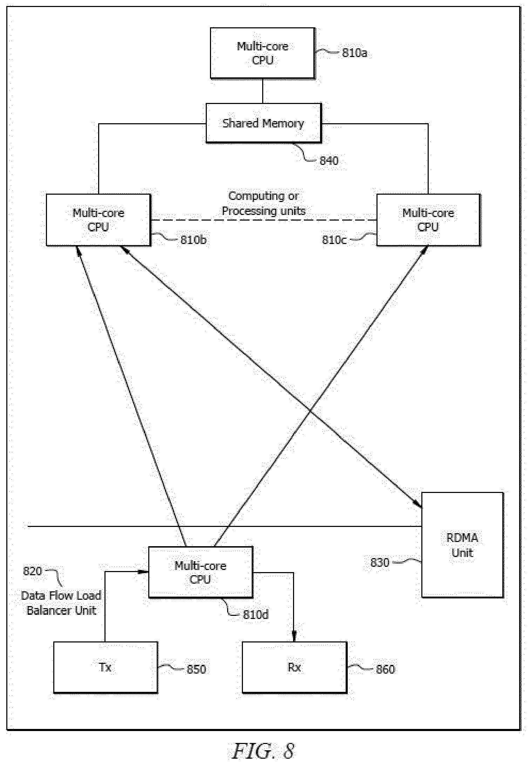

FIG. 8 illustrates a hardware design for a component that may be used to implement the systems and methods disclosed herein. Software and/or firmware may additionally or alternatively be used in implementing the disclosed systems and methods but are not shown in the figure. The computing or processing described herein may be performed on one or more multi-core CPUs 810. A data flow load balancer unit 820 may use one or more cores from one of the multi-core CPUs 810 or may use an independent multi-core CPU. Flow quality analysis results may be shared through an RDMA unit 830, which may be implemented in software, firmware, or hardware. A shared memory unit 840 may be a double data rate type three (DDR3) unit or a similar unit and may be shared among some or all of the multi-core CPUs 810. A transmitter unit 850 and a receiver unit 860 may support multiple types of media and multiple frame types, such as Ethernet, Asynchronous Transfer Mode (ATM), or frame relay.

An advantage of the systems and methods disclosed herein over existing methods may be the fact that the present method is an object-oriented model design methodology. That is, analysis blocks and functions are reusable, which may save development time. Also, code may be automatically generated, which may lead to faster development time and better software quality. Another advantage is that real time performance within a model with specific performance requirements is provided. Another advantage is guaranteed performance. That is, service quality may be improved in real time when the disclosed systems are used in network problem diagnostics, operating expenses may be reduced, and customer experience may be improved. Yet another advantage is that dynamic, distributed model execution may occur across multiple devices, fully utilizing system resources in an optimal way. This may lead to a better investment return and may allow resources to be provisioned ahead of time along with other applications to fully utilize available resources. Still another advantage is software and hardware integration, which can provide higher performance delivery.

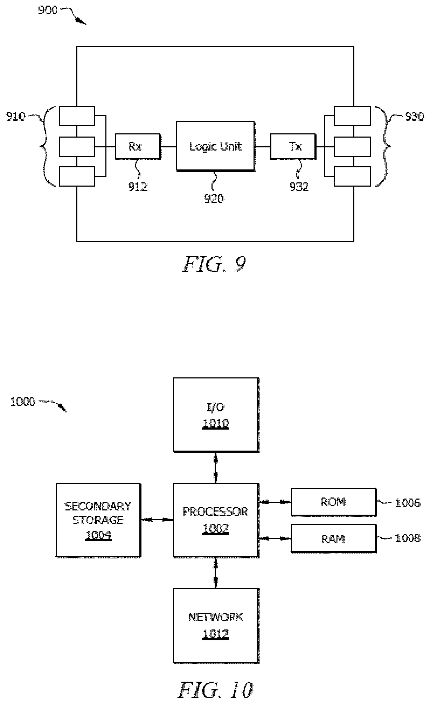

At least some of the features/methods described in the disclosure may be implemented in a network apparatus or component, such as a network node or unit. For instance, the features/methods of the disclosure may be implemented using hardware, firmware, and /or software installed to run on hardware. The network apparatus/component or unit may be any device that transports frames through a network, e.g., a switch, router, bridge, server, etc. FIG. 9 illustrates an embodiment of a transmitter/receiver unit 900, in which the disclosed methods and systems may be implemented. The transmitter/receiver unit 900 may be any device that transports data through the network. The network unit 900 may comprise one or more ingress ports or units 910 coupled to a receiver (Rx) 912 for receiving signals and frames/data from other network components. The network unit 900 may comprise a logic unit 920 to determine which network components to send data to. The logic unit 920 may be implemented using hardware, software, or both. The network unit 900 may also comprise one or more egress ports or units 930 coupled to a transmitter (Tx) 932 for transmitting signals and frames/data to the other network components. The receiver 912, logic unit 920, and transmitter 932 may also implement or support the composite link architecture, system, and method described above. The components of the network unit 900 may be arranged as shown in FIG. 9.

The schemes described above may be implemented on a network component, such as a computer or network component with sufficient processing power, memory resources, and network throughput capability to handle the necessary workload placed upon it. FIG. 10 illustrates an embodiment of a network component or computer system 1000 suitable for implementing one or more embodiments of the methods disclosed herein. The network component or computer system 1000 includes a processor 1002 that is in communication with memory devices including secondary storage 1004, read only memory (ROM) 1006, random access memory (RAM) 1008, input/output (I/O) devices 1010, and transmitter/receiver 1012. Although illustrated as a single processor, the processor 1002 is not so limited and may comprise multiple processors. The processor 1002 may be implemented as one or more general purpose central processor unit (CPU) chips, cores (e.g., a multi-core processor), field-programmable gate arrays (FPGAs), application specific integrated circuits (ASICs), and/or digital signal processors (DSPs), and/or may be part of one or more ASICs. The processor 1002 may be configured to implement any of the schemes described herein. The processor 1002 may be implemented using hardware or a combination of hardware and software.

The secondary storage 1004 is typically comprised of one or more disk drives or tape drives and is used for non-volatile storage of data and as an over-flow data storage device if the RAM 1008 is not large enough to hold all working data. The secondary storage 1004 may be used to store programs that are loaded into the RAM 1008 when such programs are selected for execution. The ROM 1006 is used to store instructions and perhaps data that are read during program execution. The ROM 1006 is a non-volatile memory device that typically has a small memory capacity relative to the larger memory capacity of the secondary storage 1004. The RAM 1008 is used to store volatile data and perhaps to store instructions. Access to both the ROM 1006 and the RAM 1008 is typically faster than to the secondary storage 1004.

The transmitter/receiver 1012 may serve as an output and/or input device of the computer system 1000. For example, if the transmitter/receiver 1012 is acting as a transmitter, it may transmit data out of the computer system 1000. If the transmitter/receiver 1012 is acting as a receiver, it may receive data into the computer system 1000. The transmitter/receiver 1012 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards such as code division multiple access (CDMA), global system for mobile communications (GSM), long-term evolution (LTE), worldwide interoperability for microwave access (WiMAX), and/or other air interface protocol radio transceiver cards, and other well-known network devices. The transmitter/receiver 1012 may enable the processor 1002 to communicate with an Internet or one or more intranets. I/O devices 1010 may include a video monitor, liquid crystal display (LCD), touch screen display, or other type of video display for displaying video, and may also include a video recording device for capturing video. I/O devices 1010 may also include one or more keyboards, mice, or track balls, or other well-known input devices.

It is understood that by programming and/or loading executable instructions onto the computer system 1000, at least one of the processor 1002, the secondary storage 1004, the RAM 1008, and the ROM 1006 are changed, transforming the computer system 1000 in part into a particular machine or apparatus (e.g., a video codec having the novel functionality taught by the present disclosure). The executable instructions may be stored on the secondary storage 1004, the ROM 1006, and/or the RAM 1008 and loaded into the processor 1002 for execution. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an ASIC, because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, Rl, and an upper limit, Ru, is disclosed, any number falling within the range is specifically disclosed. In particular, the following numbers within the range are specifically disclosed: $R = Rl + k * (Ru - Rl)$, wherein k is a variable ranging from 1 percent to 100 percent with a 1 percent increment, i.e., k is 1 percent, 2 percent, 3 percent, 4 percent, 5 percent, ..., 70 percent, 71 percent, 72 percent, ..., 95 percent, 96 percent, 97 percent, 98 percent, 99 percent, or 100 percent. Moreover, any numerical range defined by two R numbers as defined in the above is also specifically disclosed. The use of the term about means ±10% of the subsequent number, unless otherwise stated. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow. While several embodiments have been provided in the present disclosure, it may be understood that the disclosed systems and methods might be embodied in many other specific forms without departing from the scope of the present disclosure. The present examples are to be considered as illustrative and not restrictive, and the intention is not to be limited to the details given herein. Other examples of changes, substitutions, and alterations ascertainable by one skilled in the art may be made without departing from the scope of the invention as defined by the appended claims.

**Claims**

1. A system for generating and executing a distributed Internet Protocol, IP, network analysis model comprising:

   a text-based model definition file (110) being a text definition file defining an IP network analysis representing analysis flow and a hierarchical analysis tree of the analysis flow;
   an analysis function block library (120) comprising a plurality of analysis nodes (122a,122b) in an analysis model definition, wherein each of the analysis nodes (122a,122b) is associated with a set of attributes including execution time and a memory requirement and wherein each of the analysis nodes (122a,122b) comprises at least one reusable analysis block (124); wherein the analysis nodes (122a,122b) are unified analysis nodes (122a,122b) organized by means of the hierarchical analysis tree; and wherein in the unified analysis nodes (122a,122b) the number of lines of code in each analysis node (122a, 122b) is predefined, the inputs and outputs of each analysis node (122a,122b) are similar, and the analysis nodes (122a,122b) are all driven by a generic state machine;

a code generator (130) that automatically generates code (140) to implement the distributed IP network analysis model from the analysis function block library (120) by parsing the model definition file (110); and

an apparatus for executing the distributed IP network analysis model comprising:

> a processor; and
> a memory coupled to the processor, wherein the memory comprises instructions that when executed on the processor, cause the processor to:
> execute the distributed IP network analysis model on a distributed platform, wherein the distributed platform includes a flow-based load balancer (610,820) to distribute data flow to multiple analysis nodes (122a, 122b).

2. The system of claim 1, wherein each analysis node (122a,122b) is identified by a unique node identifier (ID), wherein the node ID is a string-based ID using character sets from a to z, 1 to 9, and A to Z, wherein the node ID's path from a root to the analysis node (122a,122b) is the analysis node's ID as well as the analysis node's key, wherein the maximum key length is the depth of the hierarchical analysis tree.

3. The system of claim 1, wherein each analysis block (124) is associated with a set of attributes including lines of code, average execution time for one line of code on predefined hardware, a memory requirement, and access to an input/output (I/O) component, and wherein each type of I/O is implemented in a different analysis block dedicated for I/O.

4. The system of claim 1, wherein a generic state machine is used to drive the hierarchical analysis tree to dynamically choose the next analysis node (122a,122b), wherein tree creation is performed by auto-generated initialization functions during startup of the network analysis model, and wherein a processing entry point uses the first analysis node's node ID to locate the first analysis node (122a,122b) and starts processing from the first analysis node (122a,122b).

5. The system of claim 1, wherein in the apparatus for executing the distributed IP network analysis model, one execution process is bound to one processor core during initialization of the network analysis model based on affinity support for the processor in an operating system associated with the processor.

6. The system of claim 1, wherein in the apparatus for executing the distributed IP network analysis model,an analysis node (122a,122b) returns a value indicating at least one of:

> an execution status indicating either success or failure with cause, wherein analysis is stopped and an error condition is reported if the status is failure;
> an execution result usable as an input for processing by a succeeding node (122a,122b);
> an execution state for choosing a succeeding node (122a,122b), wherein analysis jumps directly to the next node (122a,122b) and the next node's function is executed if a state machine is defined for the analysis node (122a,122b);
> an ID for the next processing node (122a,122b), wherein the ID indicates that processing is to jump to another sub-tree and that the other sub-tree is to be executed on another processor core; and
> a result of the network analysis in a case where processing is complete and the network analysis is complete, wherein a state machine for the next analysis node (122a,122b) is not specified and the next processing node's ID is empty.

7. The system of claim 1, wherein in the apparatus for executing the distributed IP network analysis model, resources for executing the network analysis model are managed by a resource manager (650,730), and wherein the resource manager (650,730) performs at least one of:

> pre-allocating processor and memory resources during initialization of the network analysis model;
> granting a processor core or memory resource based on attributes of an analysis node (122a,122b);
> retrieving and returning a processor core or memory resource; and

managing and monitoring resource utilization and availability.

8. The system of claim 7, wherein in the apparatus for executing the distributed IP network analysis model, a network analysis is started on any of a plurality of processor cores during initialization of the network analysis model by the provision of an analysis node ID and input data, and wherein, a first processing node (122a,122b) is retrieved with a starting analysis node's ID as a key and the processing is started by executing the starting analysis node's analysis functions upon a resource being granted by the resource manager (650,730).

9. The system of claim 7, wherein in the apparatus for executing the distributed IP network analysis model, the current analysis node (122a,122b) requests processor and memory resources from the resource manager (650,730) based on the next analysis node's attributes when a processor core transition is defined in an analysis model, wherein the resource manager (650,730) grants processor core and memory resources to the next node (122a,122b), wherein a message that carries node ID, resource, and input data is sent to a target process running on the granted processor core, the message indicating to start execution of the next analysis node (122a,122b), and wherein the last analysis node (122a, 122b) returns the resources to the resource manager (650,730) at the end of execution.

**Patentansprüche**

1. System zum Erzeugen und Ausführen eines verteilten Internet-Protokoll(IP)-Netzwerkanalysemodells, das Folgendes umfasst:

   eine textbasierte Modelldefinitionsdatei (110), bei der es sich um eine Textdefinitionsdatei handelt, die eine IP-Netzwerkanalyse definiert, die einen Analysefluss und einen hierarchischen Analysebaum des Analyseflusses repräsentiert;
   eine Analysefunktionsblockbibliothek (120), die eine Vielzahl von Analyseknoten (122a,122b) in einer Analysemodelldefinition umfasst, wobei jeder der Analyseknoten (122a,122b) mit einem Satz von Attributen verknüpft ist, einschließlich Ausführungszeit und einer Speicheranforderung, und wobei jeder der Analyseknoten (122a,122b) mindestens einen wiederverwendbaren Analyseblock (124) umfasst; wobei die Analyseknoten (122a,122b) vereinheitlichte Analyseknoten (122a,122b) sind, die mittels des hierarchischen Analysebaums organisiert sind; und wobei in den vereinheitlichten Analyseknoten (122a,122b) die Anzahl von Zeilen Code in jedem Analyseknoten (122a,122b) vordefiniert ist, die Eingänge und Ausgänge jedes Analyseknotens (122a,122b) ähnlich sind und alle Analyseknoten (122a,122b) von einer generischen Zustandsmaschine angesteuert werden;
   einen Codeerzeuger (130), der automatisch Code (140) erzeugt, um das verteilte IP-Netzwerkanalysemodell aus der Analysefunktionsblockbibliothek (120) durch Parsen der Modelldefinitionsdatei (110) zu implementieren; und
   eine Vorrichtung zum Ausführen des verteilten IP-Netzwerkanalysemodells, die Folgendes umfasst:

   einen Prozessor und
   einen Speicher, der an den Prozessor gekoppelt ist, wobei der Speicher Anweisungen umfasst, die, wenn sie auf dem Prozessor ausgeführt werden, den Prozessor zu Folgendem veranlassen:
   Ausführen des verteilten IP-Netzwerkanalysemodells auf einer verteilten Plattform, wobei die verteilte Plattform einen flussbasierten Lastausgleicher (610,820) beinhaltet, um den Datenfluss auf mehrere Analyseknoten (122a, 122b) zu verteilen.

2. System nach Anspruch 1, wobei jeder Analyseknoten (122a,122b) durch eine eindeutige Knotenkennung (ID) identifiziert ist, wobei die Knoten-ID eine zeichenfolgenbasierte ID ist, die Zeichensätze von a bis z, 1 bis 9 und A bis Z verwendet, wobei der Pfad der Knoten-ID von einer Root zum Analyseknoten (122a,122b) die ID des Analyseknotens als auch der Schlüssel des Analyseknotens ist, wobei die maximale Schlüssellänge die Tiefe des hierarchischen Analysebaums ist.

3. System nach Anspruch 1, wobei jeder Analyseblock (124) mit einem Satz von Attributen verknüpft ist, einschließlich Codezeilen, durchschnittliche Ausführungszeit für eine Codezeile auf vordefinierter Hardware, eine Speicheranforderung und Zugriff auf eine Eingangs-/Ausgangs(I/O)-Komponente, und wobei jeder Typ von I/O in einem anderen Analyseblock, der für I/O dediziert ist, implementiert wird.

4. System nach Anspruch 1, wobei eine generische Zustandsmaschine verwendet wird, um den hierarchischen Analysebaum derart anzusteuern, dass er dynamisch den nächsten Analyseknoten (122a,122b) auswählt, wobei eine Baumerstellung durch automatisch erzeugte Initialisierungsfunktionen während des Starts des Netzwerkanalysemodells durchgeführt wird und wobei ein Verarbeitungseingangspunkt die Knoten-ID des ersten Analyseknotens verwendet, um den ersten Analyseknoten (122a,122b) zu lokalisieren, und die Verarbeitung am ersten Analyseknoten (122a,122b) startet.

5. System nach Anspruch 1, wobei bei der Vorrichtung zum Ausführen des verteilten IP-Netzwerkanalysemodells während der Initialisierung des Netzwerkanalysemodells auf Basis einer Affinitätsunterstützung für den Prozessor in einem Betriebssystem, das mit dem Prozessor verknüpft ist, ein Ausführungsprozess an einen Prozessorkern gebunden ist.

6. System nach Anspruch 1, wobei bei der Vorrichtung zum Ausführen des verteilten IP-Netzwerkanalysemodells ein Analyseknoten (122a,122b) einen Wert zurückgibt, der mindestens eines von Folgendem anzeigt:

einen Ausführungsstatus, der entweder einen Erfolg oder einen Misserfolg mit Ursache anzeigt, wobei die Analyse gestoppt und eine Fehlerbedingung gemeldet wird, wenn der Status Misserfolg ist;
ein Ausführungsergebnis, das als Eingang für die Verarbeitung durch einen nachfolgenden Knoten (122a, 122b) verwendbar ist;
einen Ausführungszustand zum Auswählen eines nachfolgenden Knotens (122a,122b), wobei die Analyse direkt zum nächsten Knoten (122a,122b) springt und die Funktion des nächsten Knotens ausgeführt wird, wenn für den Analyseknoten (122a, 122b) eine Zustandsmaschine definiert ist;
eine ID für den nächsten Verarbeitungsknoten (122a,122b), wobei die ID anzeigt, dass die Verarbeitung zu einem anderen Unterbaum springen und der andere Unterbaum auf einem anderen Prozessorkern ausgeführt werden soll; und
ein Ergebnis der Netzwerkanalyse in einem Fall, in dem die Verarbeitung vollständig und die Netzwerkanalyse vollständig ist, wobei eine Zustandsmaschine für den nächsten Analyseknoten (122a, 122b) nicht festgelegt wird und die ID des nächsten Verarbeitungsknotens leer ist.

7. System nach Anspruch 1, wobei bei der Vorrichtung zum Ausführen des verteilten IP-Netzwerkanalysemodells Ressourcen für die Ausführung des Netzwerkanalysemodells von einem Ressourcenverwalter (650,730) verwaltet werden und wobei der Ressourcenverwalter (650,730) mindestens eines der Folgenden durchführt:

vorab Zuweisen von Prozessor- und Speicherressourcen während der Initialisierung des Netzwerkanalysemodells;
Gewähren eines Prozessorkerns oder einer Speicherressource auf Basis von Attributen eines Analyseknotens (122a, 122b);
Abrufen und Zurückgeben eines Prozessorkerns oder einer Speicherressource; und
Verwalten und Überwachen der Ressourcennutzung und -verfügbarkeit.

8. System nach Anspruch 7, wobei bei der Vorrichtung zum Ausführen des verteilten IP-Netzwerkanalysemodells während der Initialisierung des Netzwerkanalysemodells durch Bereitstellen einer Analyseknoten-ID und von Eingangsdaten auf einem einer Vielzahl von Prozessorkernen eine Netzwerkanalyse gestartet wird und wobei ein erster Verarbeitungsknoten (122a,122b) mit einer startenden Analyseknoten-ID als Schlüssel abgerufen und die Verarbeitung durch Ausführen der Analysefunktionen des startenden Analyseknotens gestartet wird, nachdem vom Ressourcenverwalter (650,730) eine Ressource gewährt wurde.

9. System nach Anspruch 7, wobei bei der Vorrichtung zum Ausführen des verteilten IP-Netzwerkanalysemodells der aktuelle Analyseknoten (122a,122b) auf Basis der Attribute des nächsten Analyseknotens beim Ressourcenverwalter (650,730) Prozessor- und Speicherressourcen anfordert, wenn ein Prozessorkernübergang in einem Analysemodell definiert ist, wobei der Ressourcenverwalter (650,730) Prozessorkern und Speicherressourcen dem nächsten Knoten (122a,122b) gewährt, wobei eine Nachricht, die Knoten-ID, Ressource und Eingangsdaten enthält, zu einem Zielprozess gesendet wird, der auf dem gewährten Prozessorkern läuft, wobei die Nachricht anzeigt, dass die Ausführung des nächsten Analyseknotens (122a,122b) gestartet werden soll, und wobei der letzte Analyseknoten (122a,122b) die Ressourcen am Ende der Ausführung an den Ressourcenverwalter (650,730) zurückgibt.

**Revendications**

1. Système permettant de générer et d'exécuter un modèle d'analyse de réseau de protocole Internet, IP, distribué comprenant :

   un fichier de définition de modèle basé texte (110) étant un fichier de définition de texte définissant une analyse de réseau IP représentant un flux d'analyse et un arbre d'analyse hiérarchique du flux d'analyse ;
   une bibliothèque de blocs de fonctions d'analyse (120) comportant une pluralité de noeuds d'analyse (122a, 122b) dans une définition de modèle d'analyse, chacun des noeuds d'analyse (122a, 122b) étant associé à un ensemble d'attributs comportant un temps d'exécution et une mémoire requise et chacun des noeuds d'analyse (122a, 122b) comprenant au moins un bloc d'analyse réutilisable (124) ; les noeuds d'analyse (122a, 122b) étant des noeuds d'analyse unifiés (122a, 122b) organisés au moyen de l'arbre d'analyse hiérarchique ; et dans les noeuds d'analyse unifiés (122a, 122b), le nombre de lignes de code dans chaque noeud d'analyse (122a, 122b) étant prédéfini, les entrées et sorties de chaque noeud d'analyse (122a, 122b) étant similaires, et les noeuds d'analyse (122a, 122b) étant tous commandés par une machine à états générique ;
   un générateur de code (130) qui génère automatiquement un code (140) destiné à mettre en oeuvre le modèle d'analyse de réseau IP distribué à partir de la bibliothèque de blocs de fonctions d'analyse (120) en analysant le fichier de définition de modèle (110) ; et
   un appareil permettant d'exécuter le modèle d'analyse de réseau IP distribué comprenant :

   un processeur ; et
   une mémoire couplée au processeur, la mémoire comportant des instructions qui, lorsqu'elles sont exécutées sur le processeur, amènent le processeur à :
   exécuter le modèle d'analyse de réseau IP distribué sur une plateforme distribuée, la plateforme distribuée comportant un dispositif d'équilibrage de charge basé sur un flux (610, 820) destiné à distribuer un flux de données à plusieurs noeuds d'analyse (122a, 122b).

2. Système selon la revendication 1, dans lequel chaque noeud d'analyse (122a, 122b) est identifié par un identifiant (ID) de noeud unique, l'ID de noeud étant un ID basé sur une chaîne utilisant des jeux de caractères allant de a à z, 1 à 9, et A à Z, le chemin de l'ID de noeud depuis une racine jusqu'au noeud d'analyse (122a, 122b) étant l'ID du noeud d'analyse ainsi que la clé du noeud d'analyse, la longueur de clé maximum étant la profondeur de l'arbre d'analyse hiérarchique.

3. Système selon la revendication 1, dans lequel chaque bloc d'analyse (124) est associé à un ensemble d'attributs comportant des lignes de code, un temps d'exécution moyen pour une ligne de code sur un matériel prédéfini, une mémoire requise, et un accès à un composant d'entrée/sortie (E/S), et chaque type d'E/S étant mis en oeuvre dans un bloc d'analyse différent dédié à une E/S.

4. Système selon la revendication 1, dans lequel une machine à états générique est utilisée pour amener l'arbre d'analyse hiérarchique à choisir dynamiquement le noeud d'analyse suivant (122a, 122b), une création d'arbre étant exécutée par des fonctions d'initialisation auto-générées durant le démarrage du modèle d'analyse de réseau, et un point d'entrée de traitement utilisant l'ID de noeud du premier noeud d'analyse pour localiser le premier noeud d'analyse (122a, 122b) et commençant un traitement à partir du premier noeud d'analyse (122a, 122b).

5. Système selon la revendication 1, dans lequel dans l'appareil permettant d'exécuter le modèle d'analyse de réseau IP distribué, un processus d'exécution est lié à un coeur de processeur durant l'initialisation du modèle d'analyse de réseau sur la base d'un support d'affinité pour le processeur dans un système d'exploitation associé au processeur.

6. Système selon la revendication 1, dans lequel dans l'appareil permettant d'exécuter le modèle d'analyse de réseau IP distribué, un noeud d'analyse (122a, 122b) retourne une valeur indiquant au moins un élément parmi :

   un état d'exécution indiquant un succès ou un échec avec une cause, une analyse étant arrêtée et une condition d'erreur étant rapportée si l'état est un échec ;
   un résultat d'exécution utilisable comme entrée pour un traitement par un noeud ayant réussi (122a, 122b) ;
   un état d'exécution permettant de choisir un noeud ayant réussi (122a, 122b), l'analyse sautant directement au noeud suivant (122a, 122b) et la fonction du noeud suivant étant exécutée si une machine à états est définie pour le noeud d'analyse (122a, 122b) ;
   un ID pour le noeud de traitement suivant (122a, 122b), l'ID indiquant qu'un traitement doit sauter jusqu'à un autre sous-arbre et que l'autre sous-arbre doit être exécuté sur un autre coeur de processeur ; et

un résultat de l'analyse de réseau dans un cas où un traitement est terminé et où l'analyse de réseau est terminée, une machine à états pour le noeud d'analyse suivant (122a, 122b) n'étant pas spécifiée et l'ID du noeud de traitement suivant étant vide.

**7.** Système selon la revendication 1, dans lequel dans l'appareil permettant d'exécuter le modèle d'analyse de réseau IP distribué, des ressources destinées à exécuter le modèle d'analyse de réseau sont gérées par un gestionnaire de ressources (650, 730), et le gestionnaire de ressources (650, 730) exécutant au moins une action parmi :

pré-attribuer des ressources pour processeur et mémoire durant l'initialisation du modèle d'analyse de réseau ;

accorder une ressource pour coeur de processeur ou mémoire sur la base d'attributs d'un noeud d'analyse (122a, 122b) ;

récupérer et retourner une ressource pour coeur de processeur ou mémoire ; et

gérer et contrôler une utilisation et une disponibilité de ressources.

**8.** Système selon la revendication 7, dans lequel dans l'appareil permettant d'exécuter le modèle d'analyse de réseau IP distribué, une analyse de réseau est démarrée sur l'un quelconque d'une pluralité de coeurs de processeur durant l'initialisation du modèle d'analyse de réseau par la fourniture d'un ID de noeud d'analyse et de données d'entrée, et un premier noeud de traitement (122a, 122b) étant récupéré avec l'ID d'un noeud d'analyse de début comme clé et le traitement étant commencé en exécutant les fonctions d'analyse du noeud d'analyse de début lorsqu'une ressource est allouée par le gestionnaire de ressources (650, 730).

**9.** Système selon la revendication 7, dans lequel dans l'appareil permettant d'exécuter le modèle d'analyse de réseau IP distribué, le noeud d'analyse courant (122a, 122b) demande des ressources pour processeur et mémoire au gestionnaire de ressources (650, 730) sur la base des attributs du noeud d'analyse suivant lorsqu'une transition de coeur de processeur est définie dans un modèle d'analyse, le gestionnaire de ressources (650, 730) allouant des ressources pour coeur de processeur et mémoire au noeud suivant (122a, 122b), un message qui contient un ID de noeud, une ressource, et des données d'entrée étant envoyé à un processus cible s'exécutant sur le coeur de processeur alloué, le message indiquant de commencer l'exécution du noeud d'analyse suivant (122a, 122b), et le dernier noeud d'analyse (122a, 122b) retournant les ressources au gestionnaire de ressources (650, 730) à la fin de l'exécution.

Model definition file ⌐ 110     120 ⌐     Function block library

```
http                    NEXT_NODES
  DESCRIPTION             http11
    "xxxx "               ::+ {http b}
  ATTRIBUTE
    W | N | E           http11
  NEXT_NODES             DESCRIPTION
    http2, http11          "xxxx "
  ::= (b)                ATTRIBUTE
                           W | N | E
http1                    NEXT_NODES
  DESCRIPTION             NULL
    "xxxx "               ::+ {http b}
  ATTRIBUTE
    W | N | E                          124b
  NEXT_NODES
    http2, http11
  ::= (a)

http2
  DESCRIPTION
    "xxxx "
  ATTRIBUTE
    W | N | E
```

122a ⌐                     122b ⌐

⌐ 124a                      ⌐ 124d

| blockA |     | blockF |
| blockB |     | blockB |
| blockC |     | blockO |

124c    124e                124f

Code Generator

⌐ 130

Source Code

⌐ 140

*FIG. 1*

HTTP Response KQI

User QoE HTTP KQI = Delay impairment factor

210

Measure HTTP User End Response time at Iu-PS, per destination / per flow / per-sec

220

More than 10% of flows / sec > HTTP_USER_END_RESPONSE_TIME_THRESHOLD

230

More than 10%> HTTP_TRANSIENT_NET_LATENCY_THRESHOLD

Measure HTTP_Internal_Trasient_Latency / per destination / per flow

240

Measure response time at egress (Gi) / per destination / per flow

250

More than 10% of flows from same destination >= EXPECTED_DESTINATION_RESPONSE_TIME

Latency problem beyond Gi, in the Destination network

Dest active HTTP service forwarding check.

Flow to dest path DB

Identify destination network segment Boundaries and gateways.

Identify destination gateway with slow RTT (>=0.5sec).

Gateway with L3-L1 problem

Identify destination segments with slow segment HTTP RTT (>=0.5sec).

Segment with L3-L1 problem

Goto network segment HTTP L1-L3 diag model

Latency problem in internal Networks.

Identify internal transient network segment boundry Gateways.

SP owned internal network segment active HTTP/GTP service check.

Transient network segment active HTTP/GTP service check

Active HTTP/GTP service forwarding check with TTL increment

Active HTTP/GTP service forwarding check with TTL increment between boundry gateways.

Flow to dest path DB

Identify gateway with slow HTTP/ GTP service forwarding (>=0.5sec).

Identify network segments with slow HTTP/GTP service forwarding (>=0.5sec).

Gateway with L3-L1 problem

Segment with L3-L1 problem

Goto gateway HTTP L1-L3 diag model

*FIG. 2*

Diag

Diag
NID = {a}

L7L4Diag

L7-L4 Diag
NID = {a.a}

L3L1Diag

L3-L1 Diag
NID = {a.b}

L3Diag

L3 Diag
NID = {a.b.a}

HTTP

HTTP
NID = {a.a.b}

HTTPKQI

HTTP Response KQI
NID = {a.a.b.a} —— 310

HTTPIuPS

320 —— IuPS HTTP Response Time
NID = {a.a.b.a.a}

HTTPGi

HTTP Response Time at Gi
NID = {a.a.b.a.a.a}

340 ——

HTTPTransientin

HTTP Internal Transient
Network Latency Check
NID = {a.a.b.a.a.b} —— 330

More than 10% of flows from
same destination >=
EXPECTED_DESINATION_RESPONSE_TIME

More than 10% of flows / sec >
HTTP_USER_END_RESPONSE_
TIME_THRESHOLD

HTTPTrace

Active HTTP Fwding Check
NID = {a.a.b.a.a.a.a.}

SPSegCheckin

SP owned internal segment
Active GTP/HTTP Fwding Check
NID = {a.a.b.a.a.b.a}

Non-SPSegCheckin

Non-SP owned internal segment
Active GTP/HTTP Fwding Check
NID = {a.a.b.a.a.b.b}

HiRTTSeg

Identify Hi RTT Segement
NID = {a.a.b.a.a.a.a.a}

HiRTTGatewy

Identify Hi RTT Gateway
NID = {a.a.b.a.a.a.a.b}

SPHiRTT Gatewy

Identify Hi RTT Gateway
NID = {a.a.b.a.a.a.a.b}

SPHiRTTSeg

Identify Hi RTT Segment
NID = {a.a.b.a.a.b.b.a}

*FIG. 3*

*FIG. 4*

*FIG. 5*

FIG. 6

*FIG. 7*

900

910

912

Rx

Logic Unit

920

Tx

932

930

FIG. 9

1000

I/O
1010

SECONDARY
STORAGE
1004

PROCESSOR
1002

ROM 1006

RAM 1008

NETWORK
1012

FIG. 10

**EP 2 789 125 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006130667 A2